(19) **Europäisches Patentamt / European Patent Office / Office européen des brevets**

(11) **EP 4 654 160 A1**

(12) **EUROPEAN PATENT APPLICATION**
published in accordance with Art. 153(4) EPC

(43) Date of publication:
26.11.2025 Bulletin 2025/48

(21) Application number: 23917191.1

(22) Date of filing: 20.11.2023

(51) International Patent Classification (IPC):
*G06V 40/16* (2022.01)

(52) Cooperative Patent Classification (CPC):
**G06T 13/40; G06V 10/80; G06V 40/16**

(86) International application number:
**PCT/CN2023/132729**

(87) International publication number:
**WO 2024/152723 (25.07.2024 Gazette 2024/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 20.01.2023 CN 202310096499

(71) Applicant: **Beijing Zitiao Network Technology Co., Ltd.**
**Beijing 100190 (CN)**

(72) Inventors:
• **FU, Mingtao**
**Beijing 100028 (CN)**
• **ZHANG, Xijin**
**Beijing 100028 (CN)**
• **YUAN, Yi**
**Beijing 100028 (CN)**

(74) Representative: **Grünecker Patent- und
Rechtsanwälte
PartG mbB
Leopoldstraße 4
80802 München (DE)**

(54) **EXPRESSION INFORMATION IDENTIFICATION METHOD AND APPARATUS, DEVICE, READABLE STORAGE MEDIUM, AND PRODUCT**

(57) The embodiment of the disclosure provides an expression information recognition method, apparatus and device, a readable storage medium and a product. The method includes: acquiring a current frame image, a historical image and a subsequent image of the current frame image, wherein the image comprises a facial image of a target object; determining target facial image feature in the current frame image based on the current frame image, the historical image and the subsequent image; and determining expression information of the target object in the current frame image based on the target facial image feature.

ACQUIRE A CURRENT FRAME IMAGE, A HISTORICAL IMAGE AND A SUBSEQUENT IMAGE OF THE CURRENT FRAME IMAGE, WHEREIN THE IMAGES COMPRISE A FACIAL IMAGE OF A TARGET OBJECT — S201

DETERMINE TARGET FACIAL IMAGE FEATURE IN THE CURRENT FRAME IMAGE BASED ON THE CURRENT FRAME IMAGE, THE HISTORICAL IMAGE AND THE SUBSEQUENT IMAGE; AND DETERMINE EXPRESSION INFORMATION OF THE TARGET OBJECT IN THE CURRENT FRAME IMAGE BASED ON THE TARGET FACIAL IMAGE FEATURE — S202

**FIG. 2**

## Description

**This** application claims priority to Chinese Patent Application No. 202310096499. X, filed with the Chinese Patent Office on January 20, 2023 and entitled "Expression information recognition method, apparatus, device, readable storage medium and product", which is hereby incorporated by reference in its entirety.

## FIELD

Embodiments of the present disclosure relate to the field of image processing technologies, and in particular relate to an expression information recognition method, apparatus, device, readable storage medium, and product.

## BACKGROUND

**In** the field of computer animation, to enable virtual characters to better express expressions, the facial expressions of virtual characters can be simulated to resemble human facial expressions.

To make it convenient for a virtual character to simulate a human facial expression, facial expressions are represented as multi-dimensional vectors. Each expression may correspond to a multi-dimensional vector. The multi-dimensional vector is applied to a facial of a virtual character, so that the virtual character expressions simulate human facial expressions.

## SUMMARY

According to a first aspect, an embodiment of the present disclosure provides an expression information recognition method, comprising: acquiring a current frame image, a historical image and a subsequent image of the current frame image, wherein the images comprise a facial image of a target object; determining target facial image feature in the current frame image based on the current frame image, the historical image and the subsequent image; and determining expression information of the target object in the current frame image based on the target facial image feature.

According to a second aspect, an embodiment of the present disclosure provides an expression information recognition apparatus, comprising: an acquisition module, configure to acquire a current frame image, a historical image and a subsequent image of the current frame image, wherein the images comprise a facial image of a target object; a predicting module, configured to determine target facial image feature in the current frame image based on the current frame image, the historical image and the subsequent image; and determine expression information of the target object in the current frame image based on the target facial image feature.

According to a third aspect, an embodiment of the present disclosure provides an electronic device, including: a processor and a memory, where the memory stores a computer execution instruction; The processor executes the computer execution instruction stored in the memory, so that the at least one processor executes the expression information recognition method according to the first aspect and various possible designs of the first aspect.

According to a fourth aspect, an embodiment of the present disclosure provides a computer readable storage medium. The computer readable storage medium stores a computer execution instruction. When a processor executes the computer execution instruction, the expression information recognition method according to the first aspect and various possible designs of the first aspect is implemented.

According to a fifth aspect, an embodiment of the present disclosure provides a computer program product, including a computer program. When being executed by a processor, the computer program implements the expression information recognition method according to the various possible designs of the first aspect and the first aspect.

## BRIEF DESCRIPTION OF THE DRAWINGS

To describe the technical solutions in the embodiments of the present disclosure or in the prior art more clearly, the following briefly introduces the accompanying drawings required for describing the embodiments or the prior art, Apparently, the accompanying drawings in the following description show some embodiments of the present disclosure, other drawings may also be obtained according to these drawings without creative efforts.

Fig. 1 is a schematic diagram of a process of determining expression information of a target object in an image in the related art;
Fig. 2 is a first schematic flowchart of an expression information recognition method according to an embodiment of the present disclosure;
Fig. 3 is a second schematic flowchart of an expression information recognition method according to an embodiment of the present disclosure;
Fig. 4 is a schematic diagram of a correction process of an expression generation model in the embodiment shown in Fig. 3;
Fig. 5 is a schematic diagram of a correction process of the expression model in the related art;
Fig. 6 is a schematic diagram of determining expression information corresponding to the plurality of frames of images in an image sequence;
Fig. 7 is a schematic diagram of the computation using a fully-connected network in the expression model of the related art the expression information recognition device;
Fig. 8A and Fig. 8B are schematic diagrams of one-dimensional convolution network computations in the expression generation model in the embodiment shown in Fig. 3;

Fig. 9 is a structural block diagram of an expression information recognition apparatus according to an embodiment of the present disclosure;

Fig. 10 is a schematic diagram of a hardware structure of an expression information recognition apparatus according to an embodiment of the present disclosure.

## DETAILED DESCRIPTION

To make objects, technical solutions and advantages of the embodiments of the present disclosure more apparent, the technical solutions in the embodiments of the present disclosure will be described below in a clearly and fully understandable way in connection with the drawings related to the embodiments of the present disclosure. Obviously, the described embodiments are only a part but not all the embodiments of the present disclosure. All other embodiments obtained by persons of ordinary skill in the art based on the embodiments of the present disclosure without creative efforts shall belong to the scope of protection of the present disclosure.

In order to enable the expression of a virtual character to simulate a real human expression, human facial expression information extraction may be performed on each frame of human facial images among a plurality of consecutive frame of human facial images respectively, and apply the extracted expression information of each frame of human facial image to the virtual human facial respectively. In this solution, human facial expression recognition is performed on a single frame of image, and when human facial expression recognition is performed on a plurality of consecutive frame of human facial images, the correlation between the expression information of the recognized frame of human facial images is weak. In this way, when the expression information respectively corresponding to the foregoing consecutive multiple human facial images is applied to the virtual character, an inconsistent phenomenon, that is, a jitter phenomenon, occurs on the expression of the virtual character in the picture.

In some application scenarios, a plurality of consecutive frames of facial expressions of a user may be simulated, for example, simulating facial expressions in an image frame sequence corresponding to the video stream. Specifically, facial expression information corresponding to the plurality of frames of images may be extracted, and then the facial expression information is applied to a virtual character. Currently, when expression information of a plurality of human facial images is applied to a virtual character, a jitter phenomenon exists.

In order to improve the described jitter phenomenon, in some other related technologies, with regard to a consecutive multi-frame human facial image, expression information about a human facial expression of a previous frame of historical image or previous two frames of historical images is fused to expression information about a current frame of image in a certain proportion, to serve as the expression information about the current image. Apply to the virtual person expression information of the current frame image in which the expression information of the history image is fused. The inventor finds that, when the expression information of the human facial obtained in the foregoing solution is applied to a virtual character, a jitter phenomenon still occurs.

To determine the facial expression information, facial muscles may be divided into a plurality of action units (Action Unit), and a plurality of facial expressions may be represented by a combination of the plurality of action units. Suppose the number of facial action units is N, for each expression, feature such as positions and shapes corresponding to N action units in the expression may be quantized according to a preset quantization rule, and quantization results of the action units are arranged according to a preset order to form expression vectors of object expressions in the facial image, so as to determine expression information of the object in the facial image.

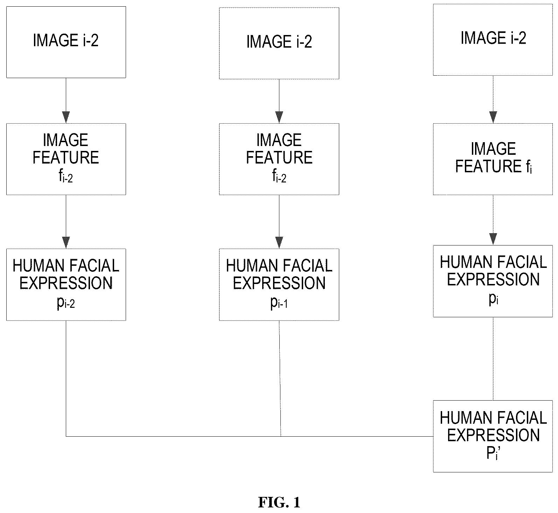

Referring to Fig. 1, it illustrates a schematic flowchart of extracting facial expression information in the related art. As shown in Fig. 1, in the related art, facial expression predictions corresponding to first two frame images of a current frame image are fused with facial expression predictions of the current frame image to serve as final facial expression predictions corresponding to the current frame image. In particular,

When the facial expression of the $i_{th}$ frame of image is predicted, image feature $f_i$, $f_{i-1}$ and $f_{i-2}$ respectively corresponding to the $i_{th}$ frame of image, the $(i-1)_{th}$ frame of image and the $(i-2)_{th}$ frame of image may be extracted, and according to image feature $f_i$, $f_{i-1}$ and $f_{i-2}$ respectively corresponding to the $i_{th}$ frame image, the $(i-1)_{th}$ frame image and the $(i-2)_{th}$ frame image, respectively predicting facial expressions $p_i$, $p_{i-1}$ and $p_{i-2}$ respectively corresponding to the $i_{th}$ frame image, the $(i-1)_{th}$ frame image and the $(i-2)_{th}$ frame image. Then, the facial expressions $p_i$, $p_{i-1}$ and $p_{i-2}$ are fused to determine p1' of the $i_{th}$ frame of image.

In the foregoing process, although the human facial expression in the current frame image is determined by using a plurality of frames of images, the following problems exist:

The facial expression of the current frame image is only fused with the facial expression of the historical image and is not fused into the facial expression in the subsequent image. Because the facial expression in the subsequent image is not fused with, the facial expression in the current frame image is determined according to the historical image and the facial expression in the current frame image, The information of the facial expression of the subsequent image is missing. On one hand, the predicted facial expression of the current frame image may be inaccurate, on the other hand, a phenomenon of inconsistency between facial expressions of a plurality of consecutive frames of images determined by the foregoing solutions may be caused.

In the related art, only expression information prediction results of facial expressions corresponding to several consecutive frames of images are fused, and image feature of the images are not involved. If the image feature extraction itself has a problem, the problem occurring during the image feature extraction cannot be corrected, thus the described jitter phenomenon cannot be improved.

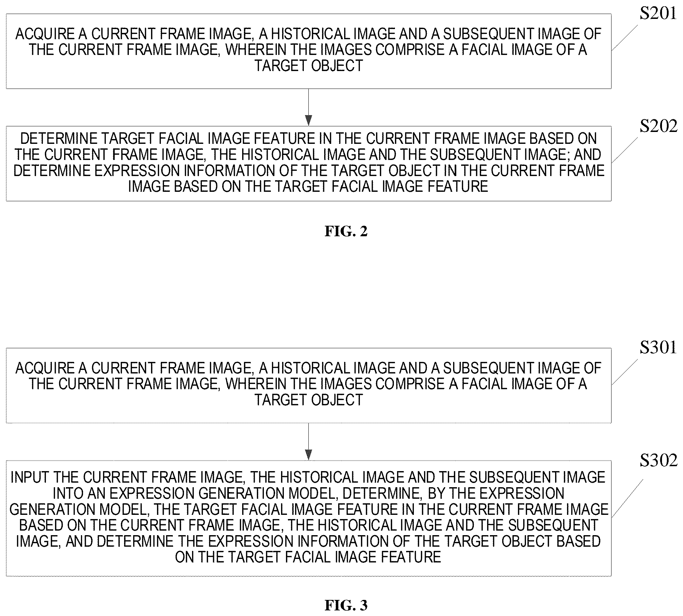

Referring to Fig. 2, Fig. 2 is a first schematic flowchart of an expression information recognition method according to an embodiment of the present disclosure. The method in this embodiment may be applied to a terminal device or a server. The facial expression information recognition method includes:

S201: acquiring a current frame image, a historical image and a subsequent image of the current frame image, wherein the image comprises a facial image of a target object.

The target object herein may be a human or may also be a target object such as an animal. In some application scenarios, the target object may also be a virtual object.

Here, the current frame image, the history image, and the subsequent image may be extracted from a consecutively acquired image sequence. The historical image may be one or more frames of images collected before the collection time of the current frame image. The subsequent image may be one or more frames of images acquired after the acquisition time of the current frame image. The number of the history images and the number of the subsequent images may be different. It should be noted that, the number of the history images and the number of the subsequent images may not be limited.

In some application scenarios, the historical image of the current frame image may include a previous frame image of the current frame image. The subsequent image of the current frame image may include the next frame image of the current frame image.

In these application scenarios, the correlation between the previous-frame image of the current-frame image and the next-frame image of the current-frame image is high, the comprehensive determination of the expression information of a target object in a current frame image by using a previous frame image, a next frame image and the current frame image, On the one hand, when the expression information of the current frame image is determined, the image information of the historical image and the image information of the subsequent image can be referred to, On the other hand, the amount of calculation for determining the expression information corresponding to the current frame image can be reduced.

In some application scenarios, the current frame image, the historical image, and the subsequent image are obtained by preprocessing an original current frame image, an original historical image, and an original subsequent image. The preprocessing includes but is not limited to operations such as image enhancement, facial positioning, cutting, and alignment and the like. The facial parts of a target object in different images after being preprocessed are in a relatively fixed positions, which facilitates subsequent processing.

S202: determining target facial image feature in the current frame image based on the current frame image, the historical image and the subsequent image; and determining expression information of the target object in the current frame image based on the target facial image feature.

In this embodiment, analysis processing may be performed on the current frame image, the historical image, and the subsequent image in various manners to determine the target facial image feature of the current frame image.

For example, a current frame image, a historical image and a subsequent image may be superposed, and then average the pixel values of the superposed images to obtain averaged image data, and an image feature is extracted from the averaged image data to obtain a target facial image feature of the current frame image.

As an implementation, the foregoing step S202 may include the following steps:

First, the respective facial image feature of the current frame image, the history image, and the subsequent image are determined, respectively.
Secondly, the respective facial image feature of the current frame of image, the historical image and the subsequent image are fused to obtain a target facial image feature of the current frame of image.

Specifically, the respective facial image feature of the current frame image, the history image and the subsequent image may be extracted according to various image feature extracting algorithms.

The image feature extraction algorithms include, but not limited to, a Gabor wavelet algorithm, a principal component analysis algorithm, and a block local binary pattern algorithm.

In some application scenarios, the described facial image feature is global facial feature of the current frame image.

In some other application scenarios, the described facial image feature may comprise local feature respectively corresponding to the plurality of action units locally.

When the described facial image feature is fused, fusion ratios respectively corresponding to the current frame image, the historical image and the subsequent image can be preset, and the facial image feature of the described current frame image, the historical image and the subsequent image are fused according to the described fusion ratios so as to obtain a target facial image feature of the current frame image.

The following describes feature fusion of a historical image, a current frame image, and a subsequent image by using a historical image including a previous frame image of a current frame image and a subsequent image including a next frame image of the current frame image. It is assumed that a facial image feature of a previous frame image is $S_{i-1}$, a facial image feature of a current frame image is $S_i$, and a facial image feature of a next frame image is $S_{i+1}$. If the preset fusion ratios of the previous-frame image, the current-frame image and the next-frame image are respectively: $k_{i-1}$, $k_i$, $k_{i+1}$, the target facial image characteristics of the current-frame image may be represented by the following formula:

$$S_i' = k_{i-1} \times S_{i-1} + k_i \times S_i + k_{i+1} \times S_{i+1} \quad (1);$$

The blending proportion of the foregoing images may be set according to a specific application scenario, which is not limited herein. As an implementation, a fusion ratio of a current frame image may be, for example, 0.7, a fusion ratio of a historical image may be, for example, 0.15, and a fusion ratio of a subsequent image may be, for example, 0.15.

In some embodiments, for any image frame, the number of historical image frames included in a historical image and the number of subsequent image frames included in a subsequent image may be preset, and then the number of frames of an image involved in target facial image feature of the image frame is determined. If the number of historical image frames included in the historical image is t1, and the number of subsequent image frames included in the subsequent image is t2, the target facial image feature of the image frame may be determined by the facial image feature of the target object in the t1+t2+1 frame of image. The length of the preset queue may be determined according to the number of frames, for example, the length of the preset queue may be t1+t2+1. facial image feature respectively corresponding to the plurality of consecutive frame images of a target object may be subsequently input into the described preset queue according to a sequence respectively corresponding to each frame image. Each facial image feature input into the preset queue may be regarded as an element of the preset queue. When the preset queue is filled up once, the facial image feature corresponding to each frame image in the preset queue are fused once to obtain the target facial image feature of an image in the preset queue. After the target facial image feature of the image in the preset queue are calculated, the first element in the preset queue may be dequeued, and then the facial image feature of the target object of the next frame image of the image frame corresponding to the tail of the original preset queue are input at the tail of the preset queue.

For example, for the $k_{th}$ frame image in the consecutive image frames, the target facial image feature of the $k_{th}$ frame image needs to be fused with the image feature of the historical image frame of the t1 frame, the facial image feature of the subsequent image frame of the t2 frame and the facial image feature of the $k_{th}$ frame image itself. Then, the facial image feature corresponding to the $(k-t1)_{th}$ frame image to the target image feature corresponding to the $(k+t2)_{th}$ frame image may be sequentially input to a preset queue according to the order of the frame images, and after the preset queue is full, various elements in the queue may be fused, so as to obtain the target facial image feature of the target object corresponding to the kth frame image. After the target facial image feature of the kth frame image are obtained, the facial image feature corresponding to the $(k-t1)_{th}$ frame image may be dequeued, and elements stored in a preset queue are respectively moved forward by one position. Then, the facial image feature corresponding to the $(k+1+t2)_{th}$ frame image are input to the tail of the preset queue, and then the target facial image feature of the $(k+1)_{th}$ frame image are calculated. Here, t1 is an integer greater than or equal to 1 and less than k, t2 is an integer greater than or equal to 1, and k is an integer greater than 1. If the preset queue is not full, not all elements in the preset queue are fused.

By fusing facial image feature of a historical image, a current frame image and a subsequent image, the facial image feature of the current image comprises image information about the historical image and the subsequent image, so that facial image feature respectively corresponding to the plurality of previous and next images are correlated with each other, thereby weakening the phenomenon of facial image feature being independent from each other between different images. If there is a deviation for the extraction of the characteristics of one frame of image in the adjacent images, the deviation may also be corrected through the characteristics of the adjacent frames of images. In this way, continuity between image feature of extracted adjacent frame images is facilitated, continuity of determined expression information corresponding to the adjacent frames is facilitated, and a jitter phenomenon that occurs when animation is applied to each expression information is improved.

The expression information corresponding to the current frame image may be determined according to the characteristics of key points on different action units in the image characteristics of the facial target feature.

The described action units may comprise, for example, a left eye, a right eye, a left eyebrow, a right eyebrow, an upper lip, a lower lip, a left cheek, a right cheek and the like.

In some application scenarios, the target facial image feature is a global facial image feature. After the global facial image feature of the current frame image is determined, the respective feature of a plurality of action units may be determined based on the global facial image feature.

The feature of the action unit may include, but not limited to, shape feature, position feature, geometric relationships of the different action units, local texturing feature of the action unit.

Specifically, feature of a plurality of key points may be extracted from the global facial image feature. The plurality of key points may include key points located at preset positions of different action units, and the preset positions herein may include, for example, contours and centers of the action units.

The shape feature of the action unit and the position feature of the action unit may be determined based on the position feature of the key point of the action units; the relative geometric relationship feature among the different action units may also be determined based on the location feature of key points of the different action units. In addition, the texture feature of different action units may also be determined based on the texture feature in the global facial feature.

After feature of each action unit are determined, the action unit feature of each action unit are quantized according to a preset quantization rule to obtain a quantization value corresponding to the action unit, that is, expression parameters corresponding to the action unit.

As an implementation, generally, for each action unit, a first reference feature corresponding to the maximum expression parameter (for example, 1) of the action unit and a second reference feature corresponding to the minimum expression parameter (for example, 0) corresponding to the action unit may be determined. The actual feature of the action unit may be compared with the first reference feature and the second reference feature to determine the expression parameter corresponding to the action unit. The parametrized degree of eye opening is used as an example for description. When eye opening is the maximum, the corresponding opening feature is the first reference feature, and the opening parameter may be set to 1. when an eye is closed, a corresponding open feature is a second reference feature, and an open parameter is set to be 0. With regard to different facial images, The eye opening feature of the current frame image obtained according to the target facial image feature may be compared with the corresponding open feature when the eye opens to the maximum and the corresponding open feature when the eye opens to the minimum, if so, according to a proportional relationship between the eye opening feature of the current frame image and the first reference feature, Determine a parameter of eye opening corresponding to the current frame image.

Through the described solution, feature of different action units in a facial image can be parameterized to obtain expression parameters corresponding to the different action units.

In some parameterization rules, an order of various action units of a facial is determined. Expression parameters of various action units of a target image are ranked according to the order of the various action units provided by the parameterization rules, to obtain a multi-dimensional expression vector corresponding to the current frame image. Each dimension expression vector corresponds to an expression parameter of one action unit. The expression information in the present disclosure may include a multi-dimension expression vector.

If only the facial image feature of the current frame image are used to determine the expression information of the target object, since there is no image information of the front and back images as a constraint, expression information determined only according to the facial image feature of the current frame image may have an expression information prediction error.

For example, during the process of smiling, a person may go through stages comprising calm, slight smile, laugh and big laugh. The described stages may correspond to 5 consecutive frames of images. Suppose the current frame image corresponds to the slight smile stage, and if the current frame image is solely based on the facial image feature of the image of the slight smile stage, or determining expression information of the current frame image according to the facial image feature obtained by fusing facial image feature of two frames of images respectively corresponding to calm and slight smile stages, The expression information of the smiling in the current frame image may be incorrectly predicted as expression information corresponding to a smile or a laugh.

Similarly, if the expression information of the target object corresponding to the current frame image is determined only according to the facial image feature of the facial images corresponding to the corresponding image (the current frame image) during smiling and the corresponding image (the subsequent image) during smiling, it is possible to incorrectly represent the expression information corresponding to the current frame image as the corresponding expression information during calm.

Through fusing respective facial image feature of the historical image, the current frame image and the subsequent image as a target facial image feature of the current frame image, the facial image feature of the historical image and the facial image feature of the subsequent image are added to the target facial image feature, equivalent to the addition of a constraint of a facial image feature of a historical image and a facial image feature of a subsequent image when determining a target facial image feature corresponding to the current frame image, Thus, a relatively accurate target facial image feature of the current frame image can be determined, thereby facilitating the improvement of the accuracy of the expression information determined by the target facial image feature and the continuity of the expression information respectively corresponding to subsequent frame images.

The expression information recognition method provided in the present embodiment comprises: firstly, acquiring a current frame image, a historical image and a subsequent image of the current frame image, wherein the image comprises a facial image of a target object; then determining a facial image feature of the current frame image according to the current frame image, the historical image and the subsequent image; Finally, expression information about a target object in a current frame image is determined based on a facial image feature, thereby achieving the fusion of image feature of multiple historical and subsequent frame images, including the current frame, into a target facial image feature of the current frame image, and determining the expression information about the current frame image according to the described fused target facial image feature of the current frame image. With respect to the related art, the expression information is respectively predicted by each image frame that is fused. In the present disclosure, respective facial image feature of a historical image, a current frame image and a subsequent image are fused to serve as target facial image feature of a current frame image, so that the facial image feature of the historical image and the facial image feature of the subsequent image are added to the target facial image feature, equivalent to the addition a constraint of a facial image feature of a historical image and a facial image feature of a subsequent image when determining a target facial image feature corresponding to the current frame image, Thus, a relatively accurate target facial image feature of the current frame image can be determined, thereby being beneficial to improving the accuracy of expression information determined by the target facial image feature, In addition, continuity of expression information corresponding to the determined consecutive frame images can be improved. This helps to improve a jitter phenomenon of the emoticon information of the virtual object in the consecutive frame images when the emoticon information of the consecutive multi-frame facial images is applied to the virtual object.

Referring to Fig. 3, Fig. 3 is a second schematic flowchart of an expression information recognition method according to an embodiment of the present disclosure. The method in this embodiment may be applied to a terminal device or a server. The expression information recognition method includes:

S301: acquiring a current frame image, a historical image and a subsequent image of the current frame image, wherein the image comprises a facial image of a target object.

S302: inputting the current frame image, the historical image and the subsequent image into an expression generation model, determining, by the expression generation model, the target facial image feature in the current frame image based on the current frame image, the historical image and the subsequent image, and determining the expression information of the target object based on the target facial image feature.

The described expression generation models may be various machine learning models, for example, an artificial neural network-based model, a convolutional neural network-based model, and the like.

In this embodiment, the described expression generation model is configured to determine and output expression information of a target object in the current frame image according to the input history image, the current frame image, and the subsequent image. Specifically, the expression generation model can respectively extract facial image feature respectively corresponding to the historical image, a current frame image and a subsequent image; Then, facial image feature respectively corresponding to the historical image, the current frame image and the subsequent image are fused to obtain a target facial image feature of the current frame image. Then, the expression information of the target object in the current frame image is predicted according to the target facial image feature.

The described expression generation model may be a model that is pre-trained using training data, wherein the training data includes a plurality sets of training data. Each set of training data includes a plurality of frames of images and an expression information annotation corresponding to one of the plurality of frames of images.

As an implementation method, the described expression generation model comprises a feature extraction network, a feature fusion network and a prediction network; wherein,

The feature extraction network is configured to respectively extract facial image feature of an input historical image, a current frame image and a subsequent image;

The feature fusion network is configured to fuse the described various facial image feature to obtain a target facial image feature corresponding to the current frame image;

The prediction network is configured to predict the expression information of the target object in the current frame image according to the target facial image feature.

The feature extraction network, the feature fusion network, and the prediction network may be simultaneously trained by training data.

In some optional implementations, the expression information recognition method further includes steps of correcting the expression generation model, and the step of correcting includes:

Firstly, acquiring training data, wherein the training data comprises a plurality groups of training data, and each group of training data comprises m frames of consecutive images and a target expression information annotation corresponding to the image of an $n_{th}$ frame in the m frames of consecutive images, where n and m are both integers, and n is greater than 1 and less than m;

Secondly, m frames of subsequent images in each group of training data are used as an input of an expression generation model, target expression information of an $n_{th}$ frame image in the group of training data is annotated as a target output, and the expression generation model is corrected to obtain a corrected expression generation model.

In these optional implementations, a plurality sets of training data may be used to correct the expression-generation model, causing the corrected expression generation model more stable and accurate. In addition, compared to the expression model correction process used in the solution of predicting expression information of each image by an expression model and then integrating expression information prediction results of each image in the related art, the described correction process omits the step of calculating the loss of prediction expression information respectively corresponding to each training sample image, and reduces the calculation amount of the model training process.

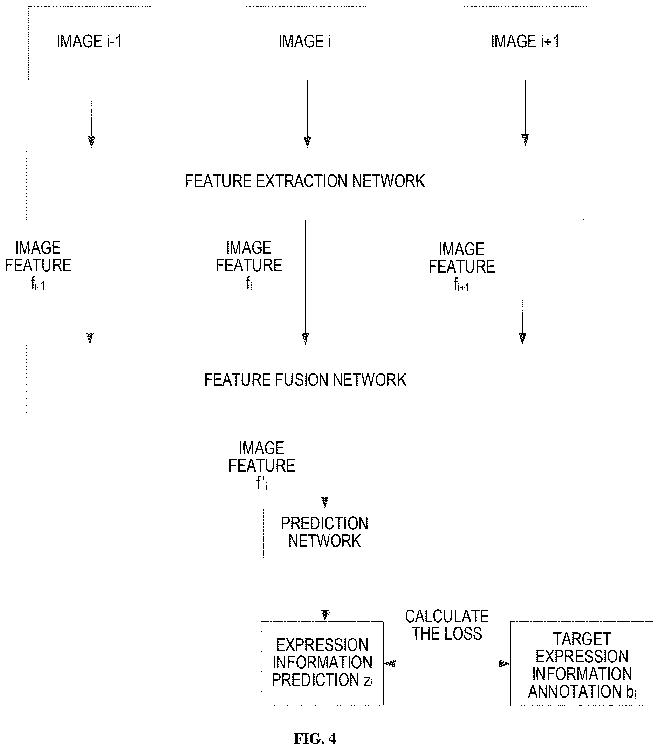

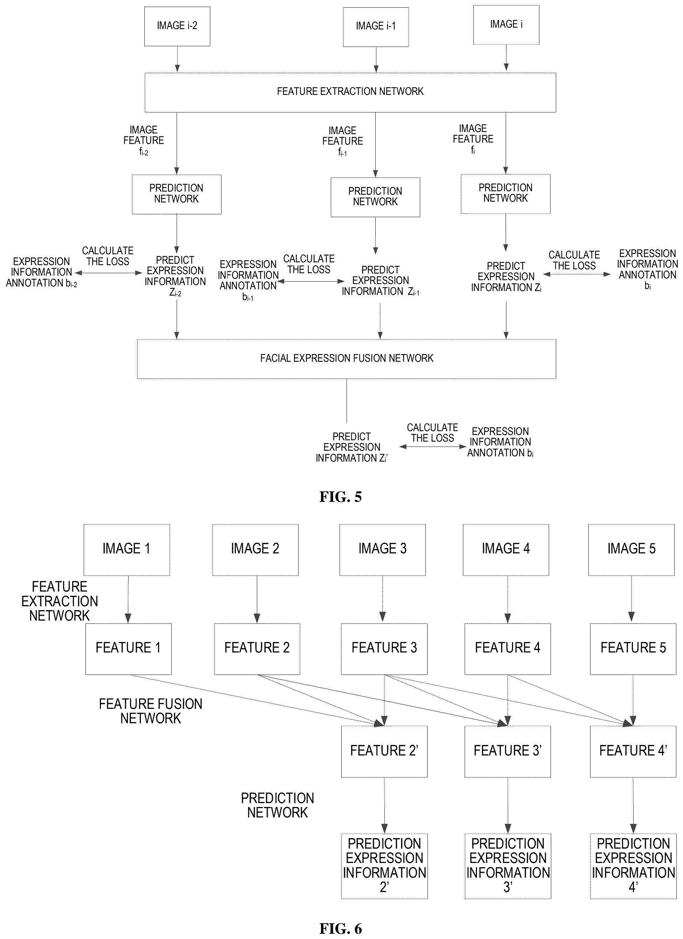

Referring to Figs. 4 and 5, Fig. 4 is a schematic diagram of a correction process of the expression generation model in this embodiment. Fig. 5 is a schematic diagram of a correction process of an expression model in the related art.

As shown in Fig. 5, the expression model in the related art includes a feature extraction network, a prediction network and an expression information fusion network. The feature extraction network can respectively extract a facial image feature of each input frame image, and the prediction network respectively predicts a prediction expression information result corresponding to each frame image according to the facial image feature of each frame image. The expression information fusion network combines the respective predicted expression information results corresponding to the respective frame images to obtain the fused predicted expression information.

Training data of the expression model may include a plurality of pieces of training data, and each group of training data may include a current frame image and a historical image of the current frame image, and expression information annotations corresponding to the current frame image and the historical image respectively.

During the training of the expression model, the expression model may be trained using each training data. Each image in each group of training data may be, for example, an image i-2, an image i-1, and an image i. Each frame image in the group may be used as an input, and expression information corresponding to the frame image is annotated as a target to be output. and annotating the predicted expression information about each frame of image and the expression information corresponding to the frame of image, using a loss function to calculate loss, feeding back to each level of network of an expression model level by level from back to front according to the loss, and adjusting network parameters of each level of network. For example, in Fig. 5, an image i-2, an image i-1 and an image i are used as training images, and the image i-2, the image i-1 and the image i respectively correspond to expression information annotation $b_{i-2}$, expression information annotation $b_{i-1}$ and expression information annotation $b_i$. During the training of the expression model, the image i-2 may be used as an input, and the facial image feature $f_{i-2}$ of the image i-2 is extracted through the feature extraction network. A facial image feature $f_{i-2}$ is input into a prediction network to obtain prediction expression information $z_{i-2}$ about an image i-2; a loss value is calculated according to the prediction expression information $z_{i-2}$, the expression information annotation $b_{i-2}$ and a preset loss function; and network parameters of networks at various levels are adjusted according to the loss value. Similarly, with image i-1 as input, the facial image feature $f_{i-1}$ of image i-1 are extracted through the feature extraction network. The facial image feature $f_{i-1}$ is input to a prediction network to obtain prediction expression information $z_{i-1}$ of the image i-1; a loss value is calculated according to the prediction expression information $z_{i-1}$, the expression information annotation bi-1 and a preset loss function; and network parameters of networks at various levels are adjusted according to the loss value. taking an image i as an input, and extracting a facial image feature fi of the image i via a feature extraction network; inputting the facial image feature fi into a prediction network to obtain prediction expression information zi about the image i; calculating a loss value according to the prediction expression information zi, an expression information annotation bi and a preset loss function; and adjusting network parameters of networks of various levels according to the loss value. The above-mentioned image i-2, image i-1 and image i are taken as input according to the model preliminarily trained using each frame of image, taking $z_i'$ obtained by fusing the prediction expression information $z_{i-2}$, $z_{i-1}$ and $z_i$ of each frame of image as the re-prediction expression information corresponding to the image i, then, calculating the loss according to the re-forecast expression information $z_i'$ of the image i, the expression information annotation bi corresponding to the image i and the preset loss function, Then, the network parameters of each level are adjusted according to the losses. As can be seen the training process of the expression model involves two steps of loss calculation, and the network parameters are adjusted according to the losses of the two steps, so that the calculation amount in the training process of the expression model is huge.

Referring to Fig. 4, the expression generation model provided by the present disclosure includes a feature extraction network, a feature fusion network, and a prediction network. Training data may include, for example, a plurality of sets of training data, and each set of training data may include, for example, images i-1, i and i+1, and expression information annotations of the images arranged in sequence according to collection time. The image i-1, the image i, and the image i+1 correspond to the emoticon information annotation $b_{i-1}$,

the emoticon information annotation $b_i$, and the emoticon information annotation $b_{i+1}$, respectively. when training the expression generation model, the facial image feature $f_{i-1}$ of the image i-1 can be obtained by taking the image i-1 as an input; using the image i as an input to obtain a facial image feature fi of the image i; and using the image i+1 as an input to obtain a facial image feature $f_{i+1}$ of the image i+1. The feature fusion network fuses the above facial image feature i-1, facial image feature i and facial image feature i+1 to obtain a target facial expression image fi' of the image i. The target facial image feature $f_i'$ is used to determine the predicted expression information $z_i$ of the target object in the image i. Loss can be calculated according to the predicted expression information $z_i$ and the expression information annotation bi of the image i and the loss function, and the network parameters of each level of network are adjusted level by level from back to front according to the loss.

In the described training process of the present disclosure, the loss is calculated only in one step, and the network parameters of each level of the expression generation model are adjusted according to the loss of this step.

Compared the training process in Figs. 5 and 4, the training process of the expression generation model shown in Fig. 4 reduces one step loss calculation, thereby reducing the calculation amount in the training process of the expression generation model.

In some optional implementations, the target expression information annotation corresponding to the $n_{th}$ frame image may be obtained by the following steps:
Low-pass filtering is performed on the initial expression information annotations respectively corresponding to m frames of consecutive images, to obtain target expression information annotations corresponding to the filtered $n_{th}$ frame image.

The low pass filtering may include, but is not limited to, performing low pass filtering in a discrete cosine transform manner or a discrete Fourier transform manner.

Taking filtering m consecutive frames of images through the discrete cosine transformation as an example, each frame of image may correspond to one initial emoticon information annotation. The initial expression information annotation may be an N dimensional vector, where among N dimensional vectors corresponding to m frames of images, vectors in a same dimension correspond to a same facial action unit. For any one-dimensional vector, m one-dimensional vectors may be arranged according to a sequence of each frame image to form a data sequence of the one-dimensional vector. The low pass filtering process is described below by taking a discrete cosine transform as an example, where m data sequences of the dimension vector undergo discrete cosine transform to obtain a frequency spectrum corresponding to the m data sequences. discarding the last dimension in the spectrum; performing inverse transform on the spectrum of m data sequences with the last dimension spectrum discarded; and using an inverse transform result as a target expression information annotation corresponding to the dimension vector of the $n_{th}$ frame image.

The described low pass filtering process is repeated for m data sequences respectively corresponding to each dimensional vector, so that target expression information annotations after low pass filtering respectively corresponding to each dimensional vector can be obtained. The target expression information annotations respectively corresponding to the various dimensional vectors are arranged according to a preset sequence of the various dimensional vectors, to obtain a target expression information annotation of the $n_{th}$ frame image.

By performing low pass filtering on initial expression information annotations corresponding to m frames of training images, abnormal initial expression information annotations can be filtered, and adverse effects of abnormal annotations occurring when initial expression information annotations are performed on facial images manually in a training process of an expression generation model can be reduced, thereby being beneficial to improving the efficiency of training an expression generation model.

Referring to Fig. 6, it shows a schematic diagram of determining expression information corresponding to multiple frames of images of an image sequence. The sequence of images may include, for example, image 1, image 2, image 3, image 4, and image 5. Image 1, image 2, and image 3 may be displayed; an image 2, an image 3, and an image 4. The image 3, the image 4, and the image 5 are input as a group to an expression generation model. The feature extraction network in the expression generation model extracts target image feature: feature 1, feature 2, feature 3, feature 4, and feature 5 respectively corresponding to image 1, image 2, image 3, image 4, and image 5. Feature 1, feature 2, and feature 3 are fused by using a feature fusion network to obtain target image feature 2' of image 2. Fusion is performed on feature 2, feature 3, and feature 4 by using a feature fusion network to obtain target image feature 3' of image 3. and merging the feature 3, the feature 4 and the feature 5 through a feature fusion network to obtain a target image feature 4' of the image 4. The prediction expression information 2' corresponding to the image 2 may be obtained by predicting the target image feature 2' by using the prediction network. The prediction network is used to predict the target image feature 3', to obtain prediction expression information 3' corresponding to the image 3. The prediction network is used to perform prediction along with the target image feature 4', to obtain prediction expression information 4' of the image feature 4. The prediction expression information of the image 2, the image 3, the image 4, and the like obtained by the described method has good continuity therebetween, and when the described expression information is applied to a virtual object, the continuity of the expression information between subsequent frames of the virtual object is also good.

In some embodiments, for any image frame, the number of historical image frames included in a historical image and the number of subsequent image frames included in a subsequent image may be preset, and then the number of frames of an image involved in a target facial image feature of the image frame is determined. Suppose the number of historical image frames included in the historical image is t1, and the number of subsequent image frames included in the subsequent image is t2, the target facial image feature of the image frame may be determined by the facial image feature of the target object in the t1+t2+1 frame of image. The length of the preset queue may be determined according to the number of frames, for example, the length of the preset queue may be t1+t2+1. constructing a preset queue with a length of t1+t2+1, and subsequently inputting a plurality of consecutive frame images of a target object to the described feature extraction network, to obtain facial image feature respectively corresponding to various frame images. subsequently inputting facial image feature respectively corresponding to various frame images into the described preset queue according to a sequence respectively corresponding to the various frame images. For the $k_{th}$ frame image in the consecutive image frames, the target facial image feature of the $k_{th}$ frame image needs to be fused with the image feature of the historical image frame of t1 frame, the facial image feature of the subsequent image frame of t2 frame and the facial image feature of the $k_{th}$ frame image itself. Then, the facial image feature corresponding to the $(k-t1)_{th}$ frame image to the target image feature corresponding to the $(k+t2)_{th}$ frame image may be sequentially input to a preset queue according to the order of the frame images, and after the preset queue is full, various elements in the queue may be fused, so as to obtain the target facial image feature of the target object corresponding to the kth frame image. After the target facial image feature of the kth frame image are obtained, the facial image feature corresponding to the $(k-t1)_{th}$ frame image may be output. Then, the facial image feature corresponding to the $(k+1+t2)_{th}$ frame image are input to the tail of the preset queue, and the target facial image feature of the $(k+1)_{th}$ frame image are calculated. Here, t1 is an integer greater than or equal to 1 and less than k, t2 is an integer greater than or equal to 1, and k is an integer greater than 1. If the preset queue is not full, not all elements in the preset queue are fused.

Compared with the expression information recognition method provided in the embodiment shown in Fig. 2, in the method provided in this embodiment, an expression generation model is used to determine a target facial image feature of a current frame image that fuses image feature of a historical image, a current frame image, and a subsequent image, In addition, the expression information of the target object in the current frame image is predicted according to the target facial image feature, which can simplify the complexity of determining the expression information of the target object in the current frame image.

In some optional implementations, the feature fusion network is a one-dimensional convolution network.

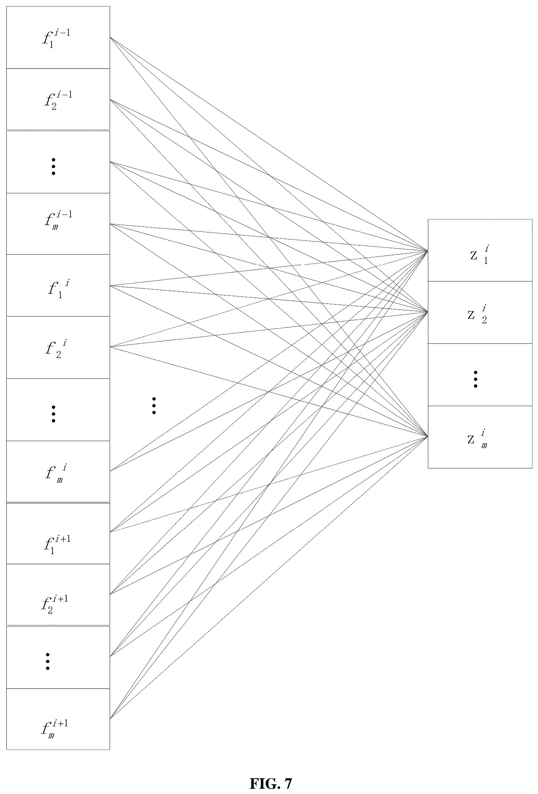

In the related art, the expression information fusion network is a fully connected network, for example, in the expression model shown in Fig. 5, the expression information fusion network is a fully connected network. Because the data dimensions of the facial image feature are higher than the dimensions of the prediction expression information, if the feature fusion network of the facial image feature uses the full connection network as the expression information fusion network, a large number of parameters and calculation amount will be caused. As shown in Fig. 7, Fig. 7 is a schematic diagram of calculation of a fully connected network.

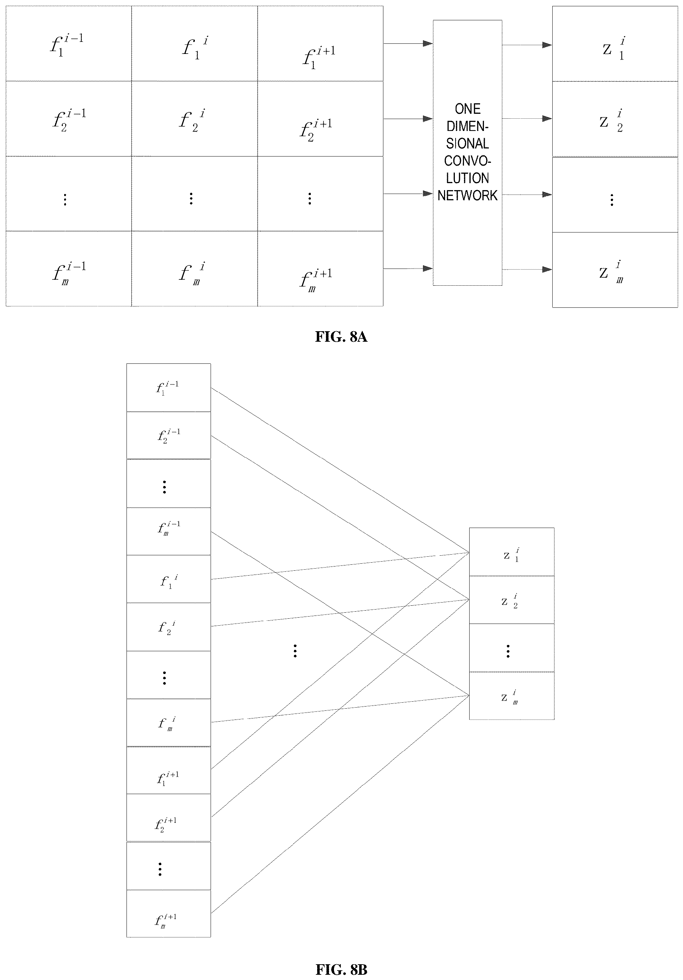

Fig. 8A and Fig. 8B are schematic diagrams of one-dimensional convolutional network calculation.

When the dimension reduction calculation is performed by using the fully connected layer, the target facial image feature needs to be arranged into a one-dimensional vector. As shown in Fig. 7, the target facial image feature is arranged into one-dimensional vectors $f_1^{i-1}$, $f_2^{i-1}$... $f_n^{i-1}$, $f_1^i$, $f_2^i$... $f_m^i$, $f_i^{i+1}$, $f_2^{i+1}$... $f_m^{i+1}$. An output of the fully-connected layer may be prediction expression information $z_1^i$, $z_2^i$,... , $z_m^i$ corresponding to m frames of images respectively. When the prediction expression information corresponding to m frames of images respectively is determined according to a one-dimensional vector, for the prediction expression information corresponding to each frame of image, each sub-vector in the one-dimensional vector participates in calculation.

To simplify calculation, a feature fusion network may be set as a one-dimensional convolutional network. As shown in Fig. 8A, target facial image feature may be sorted into a matrix form, for example, an m×3 target facial image feature matrix, and the m×3 matrix is put through a one-dimensional convolutional network, so as to obtain prediction expression information $z_1^i$, $z_2^i$,... , $z_m^i$ corresponding to m frames of images, respectively.

Fig. 8B converts the operation of the target facial image feature matrix and the one-dimensional convolution matrix into another presentation manner, to facilitate comparison with the calculation quantity of the fully connected network shown in Fig. 7. As shown in Fig. 8B, for the prediction expression information corresponding to each frame of image, only the previous frame of image corresponding to this frame of image, this frame of image and the latter frame of image of this frame of image participate in the calculation. For the prediction expression information corresponding to each frame of image, convolution calculation needs to be performed only by using image feature of multiple frames of images related to the frame of image and the one-dimensional convolution network. Compared with using a fully connected network to fuse feature, the image feature fusion in Fig. 7 uses a one-dimensional convolutional network, which reduces connections between a large number of neurons, and reduces the number of offset parameters and the amount of calculation.

An offset parameter in the one-dimensional convolution network shown in Fig. 8A may be W. If the offset parameter in the convolution layer is ignored, a one-dimensional convolution network is used to determine prediction expression information for a target facial image feature. Compared with a fully connected network, the calculation amount may be reduced to about 1/C, where C is the dimension of the target image feature.

After the described expression information respectively corresponding to the plurality of frames of images is obtained, each of the described expression information can be applied to a virtual object, to obtain a facial expression with good coherence of the virtual object. Specifically, each dimensional expression vector in the expression information formed by the plurality of dimensional expression vectors correspond to one action unit. With reference to action unit division of a target object image, a facial of a virtual object may also be divided into a plurality of action units, and motion parameters corresponding to various action units are set according to expression information, so that a facial expression of the virtual object can be generated.

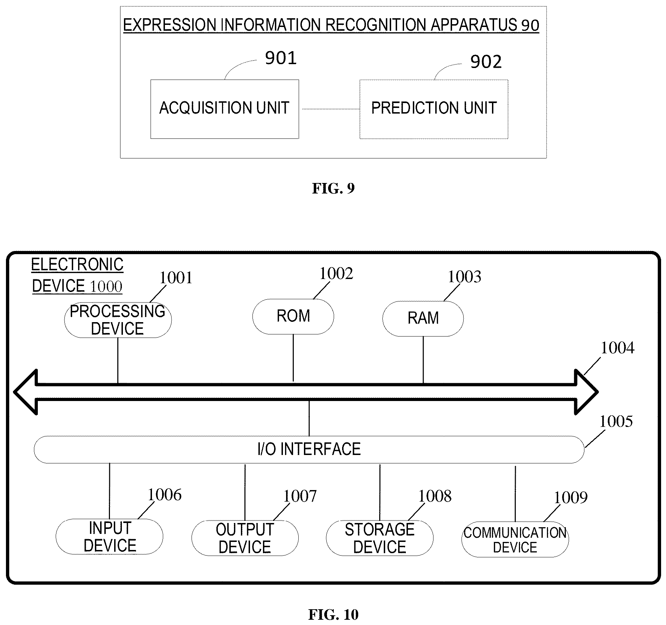

Corresponding to the expression information recognition method in the above embodiment, Fig. 9 is a structural block diagram of an expression information recognition apparatus according to an embodiment of the present disclosure. For ease of description, only parts related to the embodiments of the present disclosure are shown. Referring to Fig. 9, the apparatus 90 includes: an acquisition unit 901 and a predicting unit 902. wherein,

> The acquisition unit 901 is configured to acquire a current frame image, a historical image and a subsequent image of the current frame image, wherein the image comprises a facial image of a target object;
> The prediction unit 902 configured to determine a target facial image feature of the current frame image according to the current frame image, the historical image and the subsequent image; and determine expression information about the target object in the current frame image based on the target facial image feature.

In an embodiment of the present disclosure, the prediction unit 902 is specifically configured to: determine the facial image feature of the current frame image, the historical image and the subsequent image respectively; Fusion is performed on the current frame image, the historical image, and the facial image feature of the subsequent image to obtain the target facial image feature of the current frame image.

In an embodiment of the present disclosure, the predicting unit 902 is specifically configured to:

According to the facial image feature, determine action unit feature respectively corresponding to the plurality of facial action units;
Determine expression information about a target object in a current frame image according to a plurality of action unit feature.

In an embodiment of the present disclosure, the predicting unit 902 is specifically configured to:
Input a current frame image, a historical image and a subsequent image into an expression generation model; and determine, by the expression generation model, a target facial image feature of the current frame image according to the current frame image, the historical image and the subsequent image, and determine expression information about a target object according to the target facial image feature.

In one embodiment of the present disclosure, the expression generation model includes a feature extraction network, a feature fusion network, and a prediction network; where

> The feature extraction network is used for respectively extracting facial image feature of an input historical image, a current frame image and a subsequent image;
> The feature fusion network is used for fusing various facial image feature extracted from the image feature network to obtain a target facial image feature corresponding to the current frame image;
> The prediction network is configured to predict the expression information of the target object in the current frame image according to the target facial image feature.

In one embodiment of the present disclosure, the feature fusion network is a one-dimensional convolution network.

In one embodiment of the present disclosure, the expression information recognition apparatus further comprises a correction unit (not shown in the figure). The training unit is configured to:

> Acquire training data, wherein the training data comprises multiple groups of training data, and each group of training data comprises m frames of consecutive images and a target expression information annotation corresponding to the image of an nth frame in the m frames of consecutive images, wherein n and m are both integers, and n is greater than 1 and less than m;
> Use m frames of subsequent images in each group of training data as an input of an expression generation model, take target expression information of an $n_{th}$ frame image in the group of training data as a target output, correct the expression generation model, and obtain a corrected expression generation model.

In one embodiment of the present disclosure, the correction unit is specifically used for determining the target expression information annotation corresponding to the $n_{th}$ frame image based on the following steps: Low pass filtering is performed on the initial expression information annotations respectively corresponding to m frames of consecutive images, to obtain target expression information annotations corresponding to the filtered $n_{th}$ frame image.

In one embodiment of the present disclosure, the history image comprises a previous frame image of the current frame image, and the subsequent image comprises a next frame image of the current frame image.

To implement the described embodiments, the embodiments of the present disclosure further provide an electronic device.

Referring to Fig. 10, it shows a schematic structural diagram of an electronic device 1000 suitable for implementing an embodiment of the present disclosure. The electronic device 1000 may be an extended reality device or a terminal device. The terminal device may include, but is not limited to, a mobile terminal such as a mobile phone, a laptop computer, a digital broadcast receiver, a personal digital assistant (Personal Digital Assistant, PDA for short), a tablet computer (Portable Android Device, PAD for short), a portable multimedia player (Portable Media Player, PMP for short), a vehicle-mounted terminal (for example, a vehicle-mounted navigation terminal), and the like, and a fixed terminal such as a digital TV, a desktop computer, and the like. The electronic device shown in Fig. 10 is merely an example and should not bring any limitation to the functions and use scope of the embodiments of the present disclosure.

As shown in Fig. 10, the electronic device 1000 may include a processing device (e. g., central processing unit, graphics processor, and the like) 1001 that may perform various suitable actions and processes in accordance with a program stored in a read only memory (ROM) 1002 or a program loaded into a random access memory (RAM) 1003 from a storage device 1008. In the RAM 1003, various programs and data necessary for the operation of the electronic apparatus 1000 are also stored. The processing apparatus 1001, the ROM 1002, and the RAM 1003 are connected to each other via a bus 1004. An input/output (I/O) interfacial 1005 is also connected to the bus 1004.

In general, the following devices may be connected to the I/O interfacial 1005: an input device 1006 including, for example, a touch screen, touch pad, keyboard, mouse, camera, microphone, accelerometer, gyroscope, or the like; an output device 1007 including, for example, a liquid crystal display (LCD), a speaker, a vibrator, or the like; a storage device 1008 including, for example, a magnetic tape, a hard disk, or the like; and a communication device 1009. The communication device 1009 may allow the electronic device 1000 to communicate wirelessly or with other devices to exchange data.

While Fig. 10 illustrates the electronic device 1000 with a variety of devices, it should be understood that it is not required that all of the illustrated devices be implemented or provided. More or fewer devices may alternatively be implemented or provided.

In particular, the processes described above with reference to the flowcharts can be implemented as computer software programs in accordance with embodiments of the present disclosure. For example, embodiments of the present disclosure include a computer program product comprising a computer program carried on a computer readable medium. The computer program comprises a program code for executing the method as shown in the flowchart. In such an embodiment, the computer program may be downloaded and installed from the network via communications device 1009, installed from storage 1008, or installed from ROM 1002. When the computer program is executed by the processing apparatus 1001, the above-described functions defined in the method according to the embodiment of the present disclosure are executed.

It should be noted that the computer readable medium in the present disclosure may be a computer readable signal medium or a computer readable storage medium, or any combination thereof. A computer-readable storage medium may be, for example, but not limited to, an electronic, magnetic, optical, electromagnetic, infrared, or semiconductor system, apparatus, or device, or any suitable combination of the foregoing. More specific examples of the computer readable storage medium may include, but are not limited to, an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the present disclosure, a computer readable storage medium may be any tangible medium that can contain or store a program for use by or in connection with an instruction execution system, apparatus, or device. While in the present disclosure, a computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may also be any computer readable medium that is not a computer readable storage medium and that can communicate, propagate, or transport a program for use by or in connection with an instruction execution system, apparatus, or device. Program code embodied on a computer readable medium may be transmitted using any appropriate medium, including, but not limited to, wireline, optical fiber cable, RF (radio frequency), and the like, or any suitable combination of the foregoing.

The computer readable medium may be included in the electronic device or may exist separately and not be installed in the electronic device.

The computer readable medium bears one or more programs, and when the one or more programs are executed by the electronic device, the electronic device is enabled to execute the method shown in the foregoing embodiments.

Computer program code for carrying out operations for aspects of the present disclosure may be written in any combination of one or more programming languages, including an object-oriented programming language such as Java, Smalltalk, C++ or the like and conventional procedural programming languages, such as the 'C' programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The flowchart and block diagrams in the Figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The units involved in the embodiments of the present disclosure may be implemented through software or hardware. The name of the unit does not constitute a limitation to the unit itself in some cases. For example, the acquisition unit may also be described as a unit for obtaining the current frame image, the history image of the current frame image, and the subsequent image.

The functions described herein above may be performed, at least in part, by one or more hardware logic components. For example, without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), and the like

In the context of this disclosure, a machine-readable medium may be tangible media that may contain or store a program for use by or in connection with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the foregoing. More specific examples of machine-readable storage media would include an electrical connection based on one or more wires, a portable computer diskette, a hard disk, a random access memory (RAM), a read-only memory (ROM), an erasable programmable read-only memory (EPROM or Flash memory), an optical fiber, a compact disc read-only memory (CD-ROM), an optical storage device, a magnetic storage device, or any suitable combination of the foregoing.

According to a first aspect, according to one or more embodiments of the present disclosure, an expression information recognition method is provided, comprising:

Acquiring a current frame image, a historical image and a subsequent image of the current frame image, wherein the image comprises a facial image of a target object;
Determining target facial image feature in the current frame image based on the current frame image, the historical image and the subsequent image; and determining expression information of the target object in the current frame image based on the target facial image feature.

According to one or more embodiments of the present disclosure, determining target facial image feature in the current frame image based on the current frame image, the historical image and the subsequent image , comprising:

determining facial image feature in the current frame image, the historical image and the subsequent image respectively;
fusing the facial image feature in the current frame image, the historical image and the subsequent image to obtain the target facial image feature in the current frame image .

According to one or more embodiments of the present disclosure, determining the expression information of the target object in the current frame image based on the target facial image feature comprises:

determining movement unit feature corresponding to a plurality of facial action units based on the facial image feature;

determining the expression information of the target object in the current frame image based on a plurality of action unit feature.

According to one or more embodiments of the present disclosure, determining the target facial image feature in the current frame image based on the current frame image, the historical image and the subsequent image; and determining the expression information of a target object in the current frame image based on the target facial image feature comprises: inputting the current frame image, the historical image and the subsequent image into an expression generation model, determining, by the expression generation model, the target facial image feature in the current frame image based on the current frame image, the historical image and the subsequent image, and determining the expression information of the target object based on the target facial image feature

According to one or more embodiments of the present disclosure, the expression generation model comprises a feature extraction network, a feature fusion network, and a prediction network; wherein

the feature extraction network is used to extract the facial image feature in the input historical image, the current frame image and the subsequent image, respectively;

the feature fusion network is used to fuse respective facial image feature extracted by the image feature network to obtain the target facial image feature corresponding to the current frame image;

the prediction network is used to predict the expression information of the target object in the current frame image according to the target facial image feature.

According to one or more embodiments of the present disclosure, the feature fusion network is a one-dimensional convolution network.

According to one or more embodiments of the present disclosure, the expression information recognition method further comprises:

obtaining training data, the training data comprises a plurality of sets of training data, wherein each set of training data comprises m frames of consecutive images and a target expression information annotation corresponding to the nth frame of the m frames of consecutive images, wherein both n and m are integers, and n is greater than 1 and less than m;

using the m frames of consecutive images in each set of training data as an input of the expression generation model, using the target expression information annotation of the nth frame image in the set of training data as a target output, and calibrating the expression generation model to obtain a calibrated expression generation model.

According to one or more embodiments of the present disclosure, the target expression information annotation corresponding to the nth frame image is obtained with the following steps:

low pass filtering initial expression information annotations respectively corresponding to m frames of consecutive images to the obtain target expression information annotation corresponding to the filtered nth frame image.

According to one or more embodiments of the present disclosure, the historical image comprises a previous frame image of the current frame image, and the subsequent image comprises a subsequent frame image of the current frame image.

According to a second aspect, in one or more embodiments of the present disclosure, an expression information recognition apparatus is provided, comprising:

an acquisition module, configure to acquire a current frame image, a historical image and a subsequent image of the current frame image, wherein the images comprise a facial image of a target object;

a predicting module, configured to determine target facial image feature in the current frame image based on the current frame image, the historical image and the subsequent image; and determine expression information of the target object in the current frame image based on the target facial image feature.

determining facial image feature in the current frame image, the historical image and the subsequent image respectively; and fusing the facial image feature in the current frame image, the historical image and the subsequent image to obtain the target facial image feature in the current frame image.

According to one or more embodiments of the present disclosure, the prediction unit is specifically configured to:

determining movement unit feature corresponding to a plurality of facial action units based on the facial image feature;

determining the expression information of the target object in the current frame image based on a plurality of action unit feature.

According to one or more embodiments of the present disclosure, the prediction unit is specifically configured to:

inputting the current frame image, the historical image

and the subsequent image into an expression generation model, determining, by the expression generation model, the target facial image feature in the current frame image based on the current frame image, the historical image and the subsequent image, and determining the expression information of the target object based on the target facial image feature.

According to one or more embodiments of the present disclosure, the expression generation model comprises a feature extraction network, a feature fusion network, and a prediction network; wherein

the feature extraction network is used to extract the facial image feature in the input historical image, the current frame image and the subsequent image, respectively;

the feature fusion network is used to fuse respective facial image feature extracted by the image feature network to obtain the target facial image feature corresponding to the current frame image;

the prediction network is used to predict the expression information of the target object in the current frame image according to the target facial image feature.

According to one or more embodiments of the present disclosure, the feature fusion network is a one-dimensional convolution network.

According to one or more embodiments of the present disclosure, the expression information recognition apparatus further comprises a correction unit, wherein the correction unit is configured to:

obtaining training data, the training data comprises a plurality of sets of training data, wherein each set of training data comprises m frames of consecutive images and a target expression information annotation corresponding to the nth frame of the m frames of consecutive images, wherein both n and m are integers, and n is greater than 1 and less than m;

using the m frames of consecutive images in each set of training data as an input of the expression generation model, using the target expression information annotation of the nth frame image in the set of training data as a target output, and calibrating the expression generation model to obtain a calibrated expression generation model.

According to one or more embodiments of the present disclosure, the correcting unit is specifically configured to determine the target expression information annotation corresponding to the $n_{th}$ frame image based on the following steps:

low pass filtering initial expression information annotations respectively corresponding to m frames of consecutive images to the obtain target expression information annotation corresponding to the filtered nth frame image.

According to one or more embodiments of the present disclosure, the historical image comprises a previous frame image of the current frame image, and the subsequent image comprises a subsequent frame image of the current frame image.

According to a third aspect, according to one or more embodiments of the present disclosure, there is provided an electronic device, comprising: at least one processor and a memory;

a memory stores a computer execution instruction;

The processor executes the computer execution instructions stored in the memory, causing the processor perform the method for expression information recognition of the various designs according to the first aspect and the first aspect.

According to a fourth aspect, according to one or more embodiments of the present disclosure, provided is a computer readable storage medium. A computer execution instruction is stored in the computer readable storage medium. When a processor executes the computer execution instruction, implementing the method for expression information recognition of the first aspect and various possible designs of the first aspect.

According to a fifth aspect, according to one or more embodiments of the present disclosure, a computer program product is provided, including a computer program. When being executed by a processor, the computer program implements the expression information recognition method of the first aspect and various possible designs of the first aspect.

The foregoing description is merely illustrative of the preferred embodiments of the present disclosure and of the technical principles applied thereto, as will be appreciated by those skilled in the art, The disclosure of the present disclosure is not limited to the technical solution formed by the specific combination of the described technical feature, At the same time, it should also cover other technical solutions formed by any combination of the described technical feature or equivalent feature thereof without departing from the described disclosed concept. For example, the above feature and technical feature having similar functions disclosed in the present disclosure (but not limited thereto) are replaced with each other to form a technical solution.

In addition, while operations are depicted in a particular order, this should not be understood as requiring that the operations be performed in the order shown or in sequential order. Multitasking and parallel processing may be advantageous in certain circumstances. Likewise, while several specific implementation details are included in the above discussion, these should not be construed as limiting the scope of the present disclosure. Certain feature that are described in the context of separate embodiments can also be implemented in combination in a single embodiment. Conversely, various feature that are described in the context of a single embodiment can also be implemented in multiple embodiments separately or in any suitable sub combination.

Although the subject matter has been described in language specific to structural feature and/or methodological acts, it is to be understood that the subject matter defined in the appended claims is not necessarily limited to the specific feature or acts described above. Rather, the specific feature and acts described above are merely illustrative forms of implementing the claims.

**Claims**

1. A method for expression information recognition, comprising:

   acquiring a current frame image, a historical image and a subsequent image of the current frame image, wherein the images comprise a facial image of a target object;
   determining target facial image feature in the current frame image based on the current frame image, the historical image and the subsequent image; and determining expression information of the target object in the current frame image based on the target facial image feature.

2. The method of claim 1, **characterized in that**, determining the target facial image feature in the current frame image based on the current frame image, the historical image and the subsequent image, comprises:

   determining facial image feature in the current frame image, the historical image and the subsequent image respectively;
   fusing the facial image feature in the current frame image, the historical image and the subsequent image to obtain the target facial image feature in the current frame image.

3. The method of claim 1 or 2, **characterized in that**, determining the expression information of the target object in the current frame image based on the target facial image feature comprises:

   determining movement unit feature corresponding to a plurality of facial action units based on the facial image feature;
   determining the expression information of the target object in the current frame image based on a plurality of action unit feature.

4. The method of any one of claims 1 to 3, **characterized in that**, determining the target facial image feature in the current frame image based on the current frame image, the historical image and the subsequent image; and determining the expression information of a target object in the current frame image based on the target facial image feature comprises:

inputting the current frame image, the historical image and the subsequent image into an expression generation model, determining, by the expression generation model, the target facial image feature in the current frame image based on the current frame image, the historical image and the subsequent image, and determining the expression information of the target object based on the target facial image feature.

5. The method of claim 4, **characterized in that**, the expression generation model comprises a feature extraction network, a feature fusion network, and a prediction network; wherein

   the feature extraction network is used to extract the facial image feature in the input historical image, the current frame image and the subsequent image, respectively;
   the feature fusion network is used to fuse respective facial image feature extracted by the image feature network to obtain the target facial image feature corresponding to the current frame image;
   the prediction network is used to predict the expression information of the target object in the current frame image according to the target facial image feature.

6. The method of claim 5, **characterized in that**, the feature fusion network is a one-dimensional convolution network.

7. The method of claim 4, **characterized in that**, the method further comprises:

   obtaining training data, the training data comprises a plurality of sets of training data, wherein each set of training data comprises m frames of consecutive images and a target expression information annotation corresponding to the nth frame of the m frames of consecutive images, wherein both n and m are integers, and n is greater than 1 and less than m;
   using the m frames of consecutive images in each set of training data as an input of the expression generation model, using the target expression information annotation of the nth frame image in the set of training data as a target output, and calibrating the expression generation model to obtain a calibrated expression generation model.

8. The method of claim 7, **characterized in that**, the target expression information annotation corresponding to the nth frame image is obtained with the following steps:
low pass filtering initial expression information annotations respectively corresponding to m frames of consecutive images to the obtain target expression information annotation corresponding to the filtered nth frame image.

9. The method of any one of claims 1 to 8, **characterized in that**, the historical image comprises a previous frame image of the current frame image, and the subsequent image comprises a subsequent frame image of the current frame image.

10. An expression information recognition apparatus, comprising:

> an acquisition module, configure to acquire a current frame image, a historical image and a subsequent image of the current frame image, wherein the images comprise a facial image of a target object;
> a predicting module, configured to determine target facial image feature in the current frame image based on the current frame image, the historical image and the subsequent image; and determine expression information of the target object in the current frame image based on the target facial image feature.

11. An electronic device, **characterized by** comprising: a processor and a memory;

> the memory stores computer execution instructions;
> the processor executes the computer execution instructions stored in the memory, causing the processor perform the method for expression information recognition of any one of claims 1 to 9.

12. A computer readable storage medium, **characterized in that**, the computer readable storage medium stores computer execution instructions, when executed by a processor, implementing the method for expression information recognition of any one of claims 1 to 9.

13. A computer program product, comprising a computer program, **characterized in that**, the computer program implements the image processing method of any one of claims 1 to 9 when being executed by a processor.

| IMAGE i-2 | IMAGE i-2 | IMAGE i-2 |
|---|---|---|

$\downarrow$  $\downarrow$  $\downarrow$

| IMAGE FEATURE $f_{i-2}$ | IMAGE FEATURE $f_{i-2}$ | IMAGE FEATURE $f_i$ |
|---|---|---|

$\downarrow$  $\downarrow$  $\downarrow$

| HUMAN FACIAL EXPRESSION $p_{i-2}$ | HUMAN FACIAL EXPRESSION $p_{i-1}$ | HUMAN FACIAL EXPRESSION $p_i$ |
|---|---|---|

HUMAN FACIAL EXPRESSION $P_i'$

**FIG. 1**

ACQUIRE A CURRENT FRAME IMAGE, A HISTORICAL IMAGE AND A SUBSEQUENT IMAGE OF THE CURRENT FRAME IMAGE, WHEREIN THE IMAGES COMPRISE A FACIAL IMAGE OF A TARGET OBJECT

S201

DETERMINE TARGET FACIAL IMAGE FEATURE IN THE CURRENT FRAME IMAGE BASED ON THE CURRENT FRAME IMAGE, THE HISTORICAL IMAGE AND THE SUBSEQUENT IMAGE; AND DETERMINE EXPRESSION INFORMATION OF THE TARGET OBJECT IN THE CURRENT FRAME IMAGE BASED ON THE TARGET FACIAL IMAGE FEATURE

S202

**FIG. 2**

ACQUIRE A CURRENT FRAME IMAGE, A HISTORICAL IMAGE AND A SUBSEQUENT IMAGE OF THE CURRENT FRAME IMAGE, WHEREIN THE IMAGES COMPRISE A FACIAL IMAGE OF A TARGET OBJECT

S301

INPUT THE CURRENT FRAME IMAGE, THE HISTORICAL IMAGE AND THE SUBSEQUENT IMAGE INTO AN EXPRESSION GENERATION MODEL, DETERMINE, BY THE EXPRESSION GENERATION MODEL, THE TARGET FACIAL IMAGE FEATURE IN THE CURRENT FRAME IMAGE BASED ON THE CURRENT FRAME IMAGE, THE HISTORICAL IMAGE AND THE SUBSEQUENT IMAGE, AND DETERMINE THE EXPRESSION INFORMATION OF THE TARGET OBJECT BASED ON THE TARGET FACIAL IMAGE FEATURE

S302

**FIG. 3**

IMAGE i-1

IMAGE i

IMAGE i+1

FEATURE EXTRACTION NETWORK

IMAGE
FEATURE
$f_{i-1}$

IMAGE
FEATURE
$f_i$

IMAGE
FEATURE
$f_{i+1}$

FEATURE FUSION NETWORK

IMAGE
FEATURE
$f'_i$

PREDICTION
NETWORK

EXPRESSION
INFORMATION
PREDICTION $z_i$

CALCULATE
THE LOSS

TARGET
EXPRESSION
INFORMATION
ANNOTATION $b_i$

**FIG. 4**

**FIG. 5**

**FIG. 6**

**FIG. 7**

| $f_1^{i-1}$ | $f_1^{i}$ | $f_1^{i+1}$ | |
|---|---|---|---|
| $f_2^{i-1}$ | $f_2^{i}$ | $f_2^{i+1}$ | ONE DIMEN-SIONAL CONVO-LUTION NETWORK |
| $\vdots$ | $\vdots$ | $\vdots$ | |
| $f_m^{i-1}$ | $f_m^{i}$ | $f_m^{i+1}$ | |

| $z_1^{i}$ |
|---|
| $z_2^{i}$ |
| $\vdots$ |
| $z_m^{i}$ |

**FIG. 8A**

| |
|---|
| $f_1^{i-1}$ |
| $f_2^{i-1}$ |
| $\vdots$ |
| $f_m^{i-1}$ |
| $f_1^{i}$ |
| $f_2^{i}$ |
| $\vdots$ |
| $f_m^{i}$ |
| $f_1^{i+1}$ |
| $f_2^{i+1}$ |
| $\vdots$ |
| $f_m^{i+1}$ |

| |
|---|
| $z_1^{i}$ |
| $z_2^{i}$ |
| $\vdots$ |
| $z_m^{i}$ |

**FIG. 8B**

EXPRESSION INFORMATION RECOGNITION APPARATUS 90

901

902

ACQUISITION UNIT

PREDICTION UNIT

**FIG. 9**

ELECTRONIC
DEVICE 1000

1001

PROCESSING
DEVICE

1002

ROM

1003

RAM

1004

1005

I/O INTERFACE

1006

INPUT
DEVICE

1007

OUTPUT
DEVICE

1008

STORAGE
DEVICE

1009

COMMUNICATION
DEVICE

**FIG. 10**

## INTERNATIONAL SEARCH REPORT

| International application No. |
| --- |
| **PCT/CN2023/132729** |

| A. | CLASSIFICATION OF SUBJECT MATTER |
| --- | --- |

G06V40/16(2022.01)i

According to International Patent Classification (IPC) or to both national classification and IPC

| B. | FIELDS SEARCHED |
| --- | --- |

Minimum documentation searched (classification system followed by classification symbols)

    IPC:G06V

Documentation searched other than minimum documentation to the extent that such documents are included in the fields searched

Electronic data base consulted during the international search (name of data base and, where practicable, search terms used)

    SIPOABS, DWPI, CNABS, CNTXT, IEEE, CNKI, ENTXT, ENTXTC: 表情, 识别, 帧, 历史, 后继, expression, recogniz+, frame, history, subsequent

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 115984944 A (BEIJING BYTEDANCE NETWORK TECHNOLOGY CO., LTD.) 18 April 2023 (2023-04-18)<br>    claims 1-13 | 1-13 |
| X | CN 110188610 A (BEIJING ROSTEC CO., LTD.) 30 August 2019 (2019-08-30)<br>    description, paragraphs 2-51 | 1-13 |
| X | CN 105160318 A (BEIJING KUANGSHI TECHNOLOGY CO., LTD. et al.) 16 December 2015 (2015-12-16)<br>    claims 1-5, and description, pages 3-5 | 1-13 |
| A | CN 113723343 A (GUANGZHOU HUYA TECHNOLOGY CO., LTD.) 30 November 2021 (2021-11-30)<br>    entire document | 1-13 |
| A | KR 20170040693 A (EMOTION SCIENCE RESEARCH CENTER) 13 April 2017 (2017-04-13)<br>    entire document | 1-13 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **30 January 2024** | **07 February 2024** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/132729**

| Patent document cited in search report | | | Publication date (day/month/year) | Patent family member(s) | | | Publication date (day/month/year) |
|---|---|---|---|---|---|---|---|
| CN | 115984944 | A | 18 April 2023 | None | | | |
| CN | 110188610 | A | 30 August 2019 | None | | | |
| CN | 105160318 | A | 16 December 2015 | CN | 105160318 | B | 09 November 2018 |
| CN | 113723343 | A | 30 November 2021 | None | | | |
| KR | 20170040693 | A | 13 April 2017 | KR | 101823611 | B1 | 31 January 2018 |
| | | | | KR | 101823611 | B9 | 28 March 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310096499X